Europäisches Patentamt

(19) European Patent Office

Office européen des brevets

(11) Veröffentlichungsnummer: **0 086 317**
**B1**

(12) **EUROPÄISCHE PATENTSCHRIFT**

(45) Veröffentlichungstag der Patentschrift:
21.05.86

(51) Int. Cl.⁴: **A 01 D 43/00, A 01 D 91/04**

(21) Anmeldenummer: 82810492.7

(22) Anmeldetag: 17.11.82

(54) Verfahren und Vorrichtung zur Aufbereitung bzw. zum Konditionieren von Landwirtschaftlichem Halmgut.

(30) Priorität: 26.01.82 CH 462/82
01.04.82 CH 2008/82

(43) Veröffentlichungstag der Anmeldung:
24.08.83 Patentblatt 83/34

(45) Bekanntmachung des Hinweises auf die Patenterteilung:
21.05.86 Patentblatt 86/21

(84) Benannte Vertragsstaaten:
AT CH DE FR GB IT LI NL

(56) Entgegenhaltungen:
AT - B - 296 675
DE - A - 1 950 761
US - A - 2 639 553

(73) Patentinhaber: BUCHER-GUYER AG Maschinenfabrik,
CH-8166 Niederweningen/Zürich (CH)

(72) Erfinder: Amstutz, Jean-Pierre, Dipl. Ing.,
Bachtalenstrasse 398, CH-5242 Birr (CH)

LIBER, STOCKHOLM 1986

## Beschreibung

Die Erfindung bezieht sich auf ein Verfahren zur Aufbereitung bzw. Konditionierung von landwirtschaftlichem Halmgut mittels elektrischer Energie.

Solche Verfahren dienen einer schnelleren Futtertrocknung bei der Heuernte bzw. einer kürzeren Anwelkzeit bei der Verwendung des Futters als Silagegut.

Bei einem bekannten Verfahren (Stengelknickmaschine John Deere) wird das geschnittene Halmgut mit einem sog. Quetschzetter von der unteren der beiden übereinanderliegenden, gegenläufig rotierenden Quetschwalzen vom Boden aufgenommen und zwischen letzteren durchgeführt.

Mindestens eine der Walzen ist mit längsgerichteten Leisten versehen, die das durchtretende Futter an der benachbarten Walze quetschen.

Solche Einrichtungen wurden durch die Firma New Holland bei der Maschine "Haybine" zu einem späteren Zeitpunkt den Mähwerken nachgeschaltet, sodass das Futter unmittelbar an das Mähen durch die Quetschrollen geleitet wurde.

Bei einem anderen, durch die DE-C-21 31 134 bekanntgewordenen Verfahren wird das Halmgut unmittelbar nach dem Mähen von einer Schlag- bzw. Fördertrommel aufgenommen und durch einen aus letzterem und einer im Abstand darüber angeordneten Führungshaube gebildeten oberschlächtigen Konditionierungskanal geführt, wo es einer Schlagwirkung durch die Trommel und den in den Konditionierungskanal hineinragenden Schikanen einer Verletzung ausgesetzt wird.

Diese mechanischen Aufbereitungsverfahren haben jedoch den grossen Nachteil, dass durch das häufige Beaufschlagen des Futters, das nährreiche Blattgut von den Stengeln abgerissen bzw. abgeschlagen wird. Aufgrund seiner relativ geringen Grösse kann es von den nachfolgenden Aufsammelgeräten und Einrichtungen, wie z.B. Ladewagen nicht mehr aufgenommen werden. Zudem entstehen hohe Bröckelverluste.

Im übrigen neigen Einrichtungen mit Quetschwalzen zum Verstopfen, d.h. das Futter fällt auf den Boden zurück bzw. kann gar nicht aufgenommen werden und bleibt unbehandelt auf dem Boden liegen.

Es entstehen also wertvolle Verluste.

Es ist ferner ein nach der US-A-2'639'553 veröffentlichtes Verfahren zur Aufbereitung, vornehmlich zur Konservierung von noch stehendem Halmgut bekannt, bei welchem das Halmgut als mit der Stromquelle verbundene Leiter benutzt und von elektrischer Energie hoher Stromstärke durchströmt wird.

Es soll das Leben und das Wachstum in den Pflanzen durch die eintretende Schweisswirkung unterbrochen werden und sodann die Vortrocknung einsetzen, währenddem die Feuchtigkeit in den Wurzeln erhalten bleibt.

Nach der vorveröffentlichten AT-B-296 675 wird das noch stehende Halmgut in Form von elektrischen Schwingungen (Mikrowellen) in geringem Abstand über dem Boden durchsetzt. Durch Resonanzwirkung in den Pflanzen werden ihre Zellen durch Erwärmung zerstört und eine Zerrottung zum Unterbruch des Wachstums eingeleitet.

Dieses wie auch das Verfahren nach der amerikanischen Druckschrift sind mit einem relativ hohen Energiekonsum verbunden und die vor dem Mähen durch einen separaten Arbeitsdurchgang vorzeitig einsetzende Vortrocknung der Pflanzen führt durch eintretende Bröckelverluste beim nachfolgenden Mähen des angewelkten Futters zu Erntemindererträgen und verlängert dadurch die Erntezeit erheblich.

Es ist daher Aufgabe der Erfindung ein Verfahren der eingangs genannten Art derart zu gestalten, dass unter Vermeidung der vorerwähnten Nachteile eine hohe Konditionierwirkung bei schonender Futterbehandlung erreicht wird.

Erfindungsgemäss wird diese Aufgabe dadurch gelöst, dass das Halmgut von einer zumindest annähernd quer zur Fliessrichtung aus einer hohen Potentialdifferenz bei geringem Strom betriebenen Funkenstrecke durchsetzt wird.

Eine Vorrichtung zur Durchführung dieses Verfahrens weist erfindungsgemäss paarweise im Abstand sich zugewandt gegenüberliegend angeordnete, zur Bildung einer Funkenstrecke an mindestens eine elektrische Stromquelle angeschlossene Elektroden auf, zwischen denen das Halmgut hindurchführbar ist.

Demgemäss kann bei Verwendung eines vorgeschalteten Mähwerks bei isolierter Anordnung die Potentialdifferenz auch zwischen Ladungsträger und dem sich auf dem Boden abstützenden bzw. gleitenden Mähwerk vorgesehen werden, wodurch sich eine Verkürzung bzw. geringere Ausladung der gesamten Einrichtung erzielen lässt.

Bei der Verwendung eines Mähwerks können zudem mit einer solchen Vorrichtung das Maschinengewicht und der Fabrikationsaufwand für eine Mähkonditioniereinrichtung merkbar gesenkt werden. Gleichzeitig wird der mechanische Verschleiss erheblich gemindert.

Nachfolgend wird die Erfindung anhand mehrerer in der Zeichnung dargestellter Ausführungsbeispiele erläutert.

Es zeigen:

Figur 1 eine Seitenansicht der einem Mähwerk nachgeschalteten erfindungsgemässen Vorrichtung gemäss der Linie I-I in Fig. 2,

Figur 2 eine Draufsicht gemäss Fig. 1,

Figur 3 eine Seitenansicht eines schematisch dargestellten Kreiselmähwerks dem in alternativer Ausführung die erfindungsgemäss Konditioniereinrichtung nachgeschaltet ist,

Figur 4 eine Draufsicht gemäss Fig. 3 mit einer dem Mähwerk nachgeschalteten Verteilvorrichtung,

Figur 5 eine Seitenansicht einer Mähkonditioniereinrichtung mit einem oberschlächtigen Förderkanal als Konditioniereinrichtung,

Figur 6 eine Seitenansicht einer Mähkonditioniereinrichtung mit einem unterschlächtigen Förderkanal als Konditioniereinrichtung,

Figur 7 eine Seitenansicht der erfindungsgemässen Vorrichtung mit einem vorgeschalteten Mähwerk,

Figur 8 eine Seitenansicht einer alternativen Ausführung der Vorrichtung mit einem vorgeschalteten Mähwerk und

Figur 9 eine Seitenansicht einer weiteren Ausführung der Vorrichtung mit einem vorgeschalteten Mähwerk.

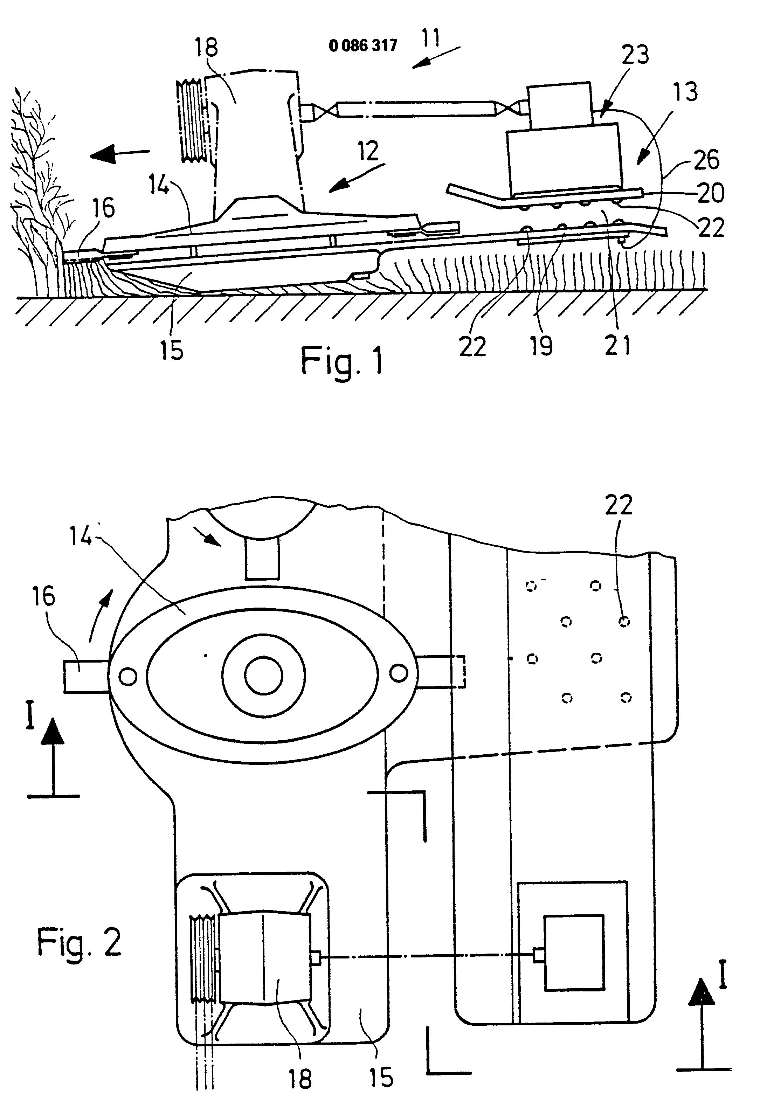

Eine in Fig. 1 mit 11 bezeichnete Mähkonditioniereinrichtung besteht aus einem, an der Dreipunktanhängevorrichtung eines Traktors oder einer anderen Zugmaschine angebauten Scheibenmähwerks 12, einer an dessen Rückseite angebauten Konditioniereinrichtung 13. Das Mähwerk 12 weist mehrere, um vertikale Achsen rotierende ovale Scheiben 14 auf, die in einem flachen, sich quer zur Fahrtrichtung auf dem Boden gleitend abstützenden Gehäuse 15 gelagert sind. Im Bereich ihres grössten Durchmessers sind die Scheiben 14 mit Messerklingen 16 versehen. Der Antrieb der Scheiben 14 erfolgt zwansläufig durch ein im Gehäuse 15 untergebrachtes Getriebe (nicht sichtbar), das über ein mit der Zapfwelle des Traktors verbundenes Zugmittelgetriebe oder eine Gelenkwelle antreibbar ist. Zum Zwecke der Umlenkung der Antriebskraft ist üblicherweise auf der dem Traktor zugekehrten Seite des Mähwerks ein weiteres Getriebe 18 vorgesehen. Die Scheiben 14 rotieren jeweils paarweise gegenläufig.

An das Mähwerk schliesst an seiner Rückseite und am Gehäuse 15 befestigt eine Konditioniereinrichtung 13 an, die zur Bildung von Strom- und Funkenschlag durch eine elektrische Potentialdifferenz mit zwei sich quer zur Fahrtrichtung und im Abstand zueinander angeordneten, mit Elektroden 22 versehenen Trägerplatten 19, 20 ausgebildet ist. Die Trägerplatten bilden einen in der Höhe begrenzten Förderkanal 21 für das vom Mähwerk kommende Halmgut und sie (19, 20) besitzen mehrere Elektroden 22, die sich zugewandt an den Wänden des durch die Trägerplatten 19, 20 gebildeten Förderkanals 21 sitzen. Die Elektroden 22 sind in den Trägerplatten 19, 20 der elektrischen Spannung wegen isoliert eingebaut.

Um der Konditionierung bei den jeweils unterschiedlichen Futtervorkommen dennoch gerecht werden zu können, ist der Abstand der Elektrodenträger 19, 20, 24, 25 bzw. der Durchtrittsquerschnitt des Förderkanals 21 variabel auszubilden. Dazu ist eine Verstellvorrichtung wie z.B. Spindeltrieb, lösbare Schraubvorrichtung vorgesehen. Vorzugsweise bilden die Elektroden 22 mit den Wänden des Förderkanals 21 eine annähernd glatte bzw. bündige Fläche. Dadurch wird das durchtretende Futter bei seinem Transport nicht gehindert. vorzugsweise ist die obere Trägerplatte 20 an der vorderen Seite des Förderkanals 21 nach oben abgebogen bzw. abgeknickt. um so den Futterzutritt zum Förderkanal zu begünstigen.

Die Elektroden 22 sind vorteilhaft an der oberen und unteren Trägerplatte 20, 19 verteilt angeordnet, wobei zu beachten ist, dass jeweils eine obere und eine untere Elektrode 22 eine elektrische Potentialdifferenz bilden und sich vorzugsweise im kürzest möglichen Abstand gegenüberliegen sollen.

Vorzugsweise sind die Elektroden in gleichmässigen Abständen und in Reihen die sich quer zur Fahrtrichtung erstrecken anzuordnen.

Das elektrische Potential an den Elektroden 22 wird durch einen oder mehrere von der Zapfwelle eines Traktors getriebenen Generators bzw. Magnetzünders 23 erzeugt. Die Potentiale sind an den Elektroden 22 über die Trägerplatten 19, 20 jeweils annähernd gleichmässig vorhanden.

Die Konditionierung bzw. Aufbereitung des Halmgutes wird über Zündenergie mit einer elektrischen Hochspannung zwischen den Elektroden erreicht, Die Zündenergie wird durch bekannte Einrichtungen, wie z.B. bei Brennkraftmaschinen erzeugt. Mit den bekannten elektronischen Zündanlagen können hohe elektrische Spannungen weit über 40'000 Volt und einer grossen Schlagweite erzielt werden.

Als Bauart sei hier u.a. die Magnetzündung von Bosch genannt.

Der Magnetzünder besteht aus einem umlaufenden, mit Permanentmagneten versehenen Polrad, das bei der Konditioniereinrichtung 13 über eine Getriebeanordnung von der Zapfwelle des Traktors aus direkt oder von einer Antriebswelle des Mähwerksantriebes angetrieben wird. Konzentrisch zum umlaufenden Polrad ist eine aus Aluminium gefertigte Platte, die den Zündanker. Unterbrecher und Kondensator trägt, angeordnet. wobei der Unterbrecher in den häuftigsten Fällen durch einen Nokken an der Polradnabe betätigt wird. Andere Ausführungen dieser Art sind hier nicht erwähnt. da sie keine erfinderische Eigenschaften aufweisen.

In der Primärwicklung des Zündankers wird bei geschlossenem Unterbrecher ein Induktionsstrom erzeugt, der im Moment der Zündung bei seinem Höchstwert durch Oeffnen des Unterbrecherkontaktes unterbrochen wird. Es entsteht nun durch die Aenderung des Magnetflusses eine induzierte Hochspannung in der Sekundärwicklung des Zündankers, der zum Funkenübertritt an den mit letzteren leitungsverbunden Elektroden 22 führt.

Es sind auch kontaktlos gesteuerte Transistor-Spulenzündungen bekannt, die bei der erfindungsgemässen Konditioniereinrichtung eingesetzt werden können.

Der Funkenschlag zwischen den Elektroden entsteht durch die Potentialdifferenz und die Hochspannung, wobei durch den Elektronenfluss von der Elektrode mit dem kleineren Potential zur Elektrode mit dem grösseren Potential ein ionisierter Zwischenraum als Träger der sich schlagartig lösenden Energie entsteht.

Da bei hohem Futterbastand im Förderkanal 21 durch das eng anliegende Halmgut eine elektrische Verbindung zwischen den Elektroden 22 entstehen kann, würden anstelle von Funkenschlägen geringe Stromschläge entstehen, die durch das Halmgut fliessen. Solche Stromschläge heizen die Zellen bis zum Bersten auf und leiten die Austrocknung des Halmgutes in einem hohen Masse ein.

Die elektrische Potentialdifferenz wird einerseits durch die erheugte Hochspannung und der Masse am stationären Teil des Magnetzünders erzielt.

Beide können wahlweise mit den Elektrodenpaaren verbunden werden, d.h. die Funken können sowohl von der oberen Trägerplatte 20 zur unteren 19 übertreten, als auch umgekehrt oder der Anschluss an die Elektroden erfolgt alternierend, sodass der Funkenübertritt von oben nach unten wie auch von unten nach oben zwischen den Trägerplatten stattfindet.

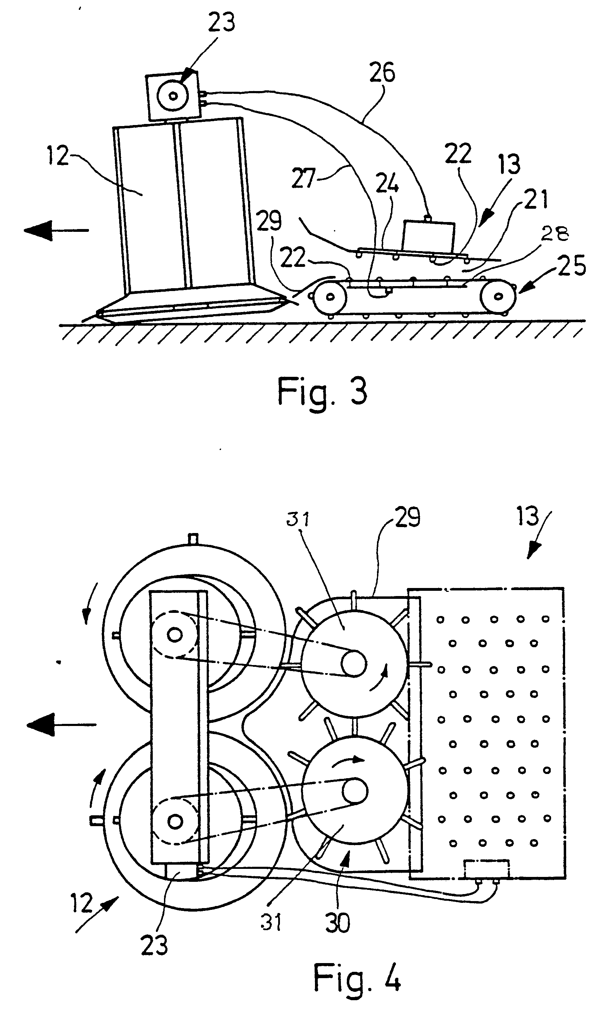

In Fig. 3 ist anstelle eines Scheibenmähwerks ein Trommelmähwerk 12 vorgesehen, auch Finger- und Bandmähwerke würden ihren Zweck erfüllen. Die Konditioniereinrichtung 13 ist mit einem stationären Elektrodenträger 24 versehen, der den Förderkanal nach oben hin begrenzt und sie weist einen beweglichen Elektrodenträger 25 in Form eines Förderbandes zur Begrenzung des Förderkanals nach unten hin auf. Die Zündung erfolgt durch den mit der Antriebswelle des Mähwerks verbundenen Generator bzw. Magnetzünder, an den mittels elektrischer Leitungen 26, 27 die Elektroden 22 der Elektrodenträger 24, 25 angeschlossen bzw. anschliessbar sind. An ihrer rückwärtigen Seite gleiten die Elektroden 22 über eine Kontaktschiene 28, die mit der Stromquelle leitungsverbunden ist. Vorzugsweise sind der Magnetzünder 23 und der bewegliche Elektrodenträger 25 synchron geschaltet, sodass sich die Elektroden 22 im Moment des Funkenschlages gegenüberliegen.

Zur Begünstigung des Futterflusses ist zwischen Trommelmähwerk 12 und Konditioniereinrichtung 13 ein Leitblech 29 vorgesehen und der obere Elektrodenträger 24 ist an seiner Vorderseite nach oben gebogen.

Fig. 4 zeigt ein Trommelmähwerk 12 mit einer Konditioniereinrichtung aus der Vogelschau. Bekanntlich neigt ein solches Mähwerk zur Bildung eines schmalen Futterstromes, sodass der Konditioniereffekt am anfallenden Futter nicht wunschgemäss ausfällt. Zur Verbesserung dieses Nachteils wird zwischen das Mähwerk 12 und die Konditioniereinrichtung 13 eine Verteilvorrichtung eingebaut. Bei der Dargestellten handelt es sich um zwei gegenläufig rotierende Zinkentrommeln 31, die das Futter hinter dem Mähwerk ergreifen und ähnlich wie bei einem Kreiselzettwender auf eine grössere Breite verteilen, sodass es in einer dünneren Schicht durch die Konditioniereinrichtung 13 läuft. Der Antrieb dieser haspelähnlichen Vorrichtung wird mit einem Zugmittelgetriebe von der Mähtrommel übernommen. Gegen allfällige Futterverluste ist wiederum ein Leitblech 29 an die Rückseite des Mähwerks angeschlossen.

Zur Verbesserung des genannten Mangels könnte anstelle der das Maschinengewicht erhöhenden Verteileinrichtung 30 die Konditioniereinrichtung 13 sowohl mit einem vertikalen als auch mit einem waagrechten bzw. zum Boden parallelen Strom- und Funkenschlag ausgerüstet werden. Dies würde bedeuten, dass die Elektrodenträger zu einem im Futterfluss liegenden, kastenähnlichen Förderkanal 21 zusammengesetzt werden. Die Intensität der Stromund Funkenschläge könnte dadurch wirksam erhöht werden.

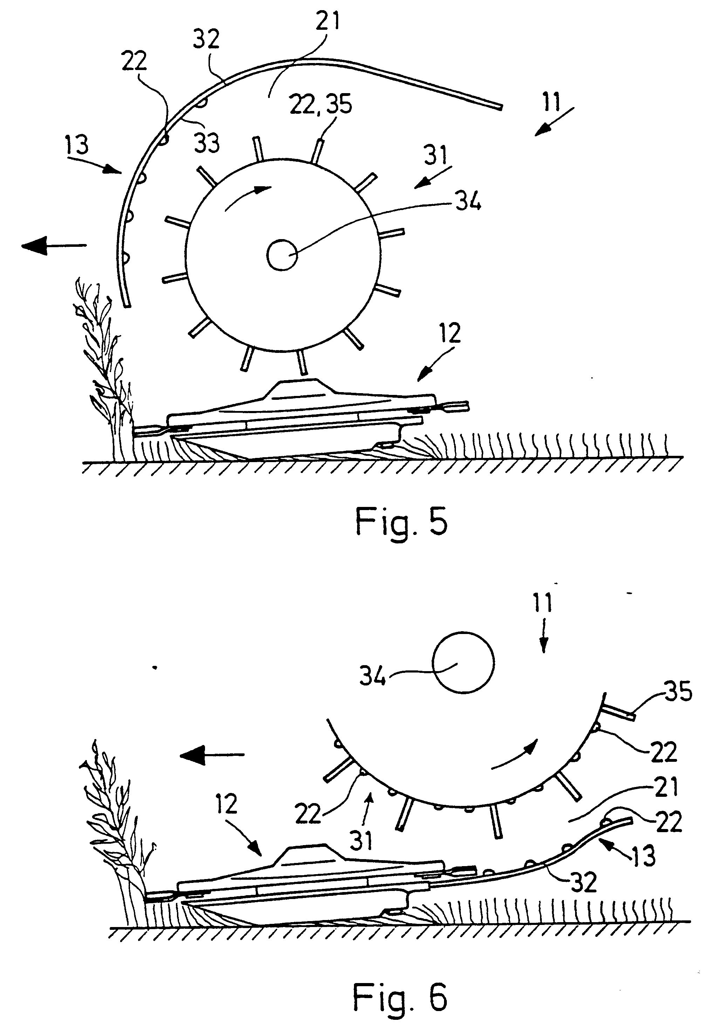

In Fig. 5 ist eine Mähkonditioniereinrichtung 11 veranschaulicht, die ein Scheibenmähwerk 12 und einen darüber angeordneten Förderrotor 31 aufweist, der mit einer Haube 32 einen oberschlächtigen Förderkanal 21 zur Konditionierung des durchströmenden Halmgutes bildet. Die Haube 32 besitzt eine zumindest annähernd glatte Innenwand 33. von der aus die Elektroden 22 gegen die Förderrotorachse 34 hin gerichtet sind. Der Förderrotor 31 kann wie dargestellt einen trommelartigen Mantel aufweisen. von dem die als Elektroden ausgebildeten Förderzinken 35 annähernd radial abstehen. Die Förderzinken 35 sind vorteilhaft in regelmässigen Abständen am Umfang des Mantels verteilt angeordnet. Der Funkenschlag erfolgt in analoger Weise wie bei den vorangegangenen Konditioniereinrichtungen. Um den mechanischen Zerreisseffekt möglichst weitgehend verhindern zu können. kann anstelle der zinkenartigen Elektrode 22 am Förderrotor 31 auch eine nur leicht vorstehende Elektrode 22 vem endet werden. Bei dieser Ausführungsform müsste dann die Zahl der Förderzinken auf ein Minimum reduziert werden. Der Förderrotor 31 ist vorteilhaft mit einer relativ hohen Drehzahl zu versehen, damit das Halmgut durch die Zentrifugalkraftwirkung zwischen den Elektrodenspitzen den Förderkanal durchströmt und nicht am Mantel des Förderrotors 31 aufliegt.

Es könnte auch ein Förderrotor 31 vorgesehen werden, der keine Ummantelung aufweist. Auch eine solche Ausgestaltung des Förderrotors verlangt eine relativ hohe Futtergeschwindigkeit im Förderkanal 21.

Das Futter wird einer intensiven Konditionierung ausgesetzt, wenn der Förderrotor 31 und die Zündung synchron gesteuert sind, d.h. wenn Funkenschlagzeit und die Geschwindigkeit der beweglichen Elektroden 22 übereinstimmen, sodass bei jeder Gegenüberstellung der Elektroden ein Funke überschlagen kann.

Dies gilt übrigens auch bei der in Fig. 6 gezeigten Mähkonditioniereinrichtung 11, die als Unterschied zu Fig. 5 einen unterschlächtigen Förderkanal 21 aufweist. Der unterschlächtige Förderkanal 21 besitzt den Vorteil, dass wegen der auf das Futter einwirkenden Gravitation die Zentrifugalkraft der hohen Rotation des Förderrotors nicht ausgenutzt zu werden braucht und somit ein längeres Verharren des Futters im Förderkanal 21 eine intensivere Konditionierwirkung ermöglicht.

Zur Optimierung der Konditionierwirkung könnte eine Ausführung nach der erfindungsgemässen Vorrichtung einem Mähwerk vorgeschaltet werden, d.h. dass der Strom- und Funkenschlag auf das stehende Halmgut ausgeübt wird. Es wäre jedoch zweckmässig, dass die Elektroden 22 derart angeordnet sind, dass sie unmittelbar vor dem Schnitt auf das Halmgut einwirken.

Eine solche Konditioniereinrichtung könnte zu diesem Zweck mit in Fortbewegungsrichtung abstehenden Elektroden 22 versehen werden, die bis annähernd zu ihrem freien Ende hin isoliert sind, sodass sich der Strom- bzw. Funkenschlag jeweils quer zur Fortbewegung der Maschine ausbreitet.

Es wäre auch denkbar, dass die Konditioniereinrichtung ohne Mähwerk 12 oder zusätzliches Aufnahmeorgan brauchbar ist, wobei insbesondere mit den Ausführungen nach den Fig. 3 und 5 das im voraus geschnittene Futter in einem zweiten Arbeitsgang konditioniert werden könnte.

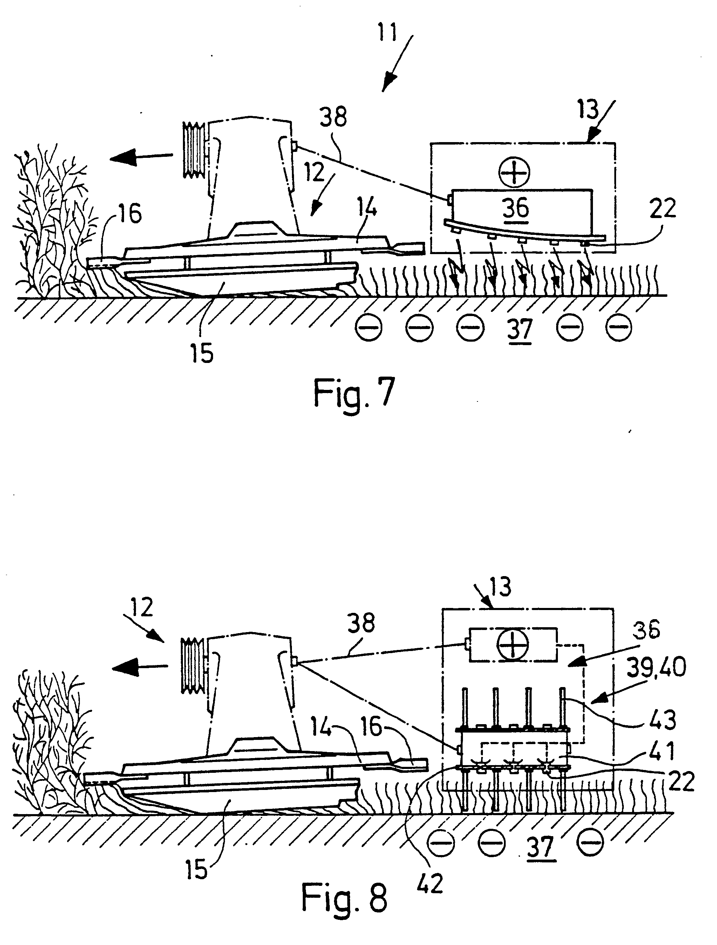

Eine in Fig. 7 mit 11 bezeichnete Mähkonditioniereinrichtung besteht aus einem Scheibenmähwerk 12, das an einem Traktor oder einer anderen Zugmaschine angebaut ist, und der nachfolgenden erfindungsgemässen Konditioniervorrichtung 13. Vorteilhaft ist diese Konditioniereinrichtung mit dem Mähwerk zusammengebaut.

Das Mähwerk 12 weist mehrere um vertikale Achsen rotierende Scheiben 14 auf, an deren Umfang Messer 16 befestigt sind und die an einem flachen, sich quer zur Fahrtrichtung auf dem Boden gleitend abgestützten Gehäuse lagern.

Der Antrieb der Scheiben 14 erfolgt zwangsläufig durch ein im Gehäuse 15 angeordnetes Getriebe (nicht sichtbar), das über ein mit der Zapfwelle des Traktors verbundenes Zugmittelgetriebe oder eine Gelenkwelle antreibbar ist.

Die an das Mähwerk anschliessende Konditionierorrichtung 13 dient der Bildung von Strom- und Funkenschlag durch eine elektrische Potentialdifferenz, die zwischen einem Ladungsträger 36 und der Erde 37 gebildet wird.

Der Ladungsträger 36 weist an seiner Unterseite mehrere zum Boden gerichtete Elektroden 22 auf, die über die Breite des Futterstromes verteilt angeordnet sind.

Das vom Mähwerk kommende, durch den von Ladungsträger und Erde gebildeten Raum strömende Futter, wird von überspringenden Strom- und Funkenschlägen im Sinne einer zweckmässigen Konditionierung verletzt.

Die Konditioniervorrichtung 13 ist gegenüber dem Mähwerk elektrisch isoliert angeordnet, wie dies durch die strichpunktierte Linie angedeutet ist.

Die Elektrische Ladung im Ladungsträger 36 kann über eine mit dem Mähwerk antriebsverbundene Welle 38 erzeugt werden und die Steuerung des periodischen Strombzw. Funkenübertrittes kann durch eine nicht dargestellte Zündvorrichtung erfolgen. Die Konditionierung des Futters wird demnach mit elektrischer Hochspannung erreicht.

Es können mit bekannten elektronischen Zündanlagen elektrische Spannungen von mehr als 40'000 Volt bei einer grossen Schlagweite erreicht werden.

Die Funktionsweise eines Magnetzünders beispielsweise, wird hier nicht beschrieben, da sie nicht erfindungswesentlich ist. Es wird in diesem Zusammenhang auf den vorangegangenen, diesbezüglichen Text verwiesen. Es sind auch kontaktlos gesteuerte Transistor- bzw. Spulenzündungen bekannt, die bei der vorliegenden Konditionierungsart eingesetzt werden können.

Die sich in Form von Funkenschlag oder Stromstössen schlagartig lösende Energie entsteht durch die Differenz der Potentiale zwischen der mit dem Ladungsträger 36 verbundenen Elektrode 22 und der Erde. Die Auslösung erfolgt ab einer bestimmten Grösse der Potentialdifferenz bzw. dem Abstand der Pole.

Bei hohem Futterbestand ist es möglich, dass der Uebertritt von Strom und Funken infolge Leitungsschluss durch das Halmgut erfolgt. Die Stromschläge heizen das Halmgut auf und leiten dadurch eine beschleunigte Trocknung ein.

Anstelle eines Scheibenmähwerks 12 kann auch ein Trommelmäher, Fingermäher oder Bandmäher verwendet werden, wobei letztere zwei aufgrund ihres mässigen Futtertransportes vorteilhaft mit einem Förderer, z.B. Haspel auszurüsten sind.

Mähwerk und Konditioniervorrichtung können auch getrennt am Traktor angebaut werden, z.B. das Mähwerk mit Seitenheckanbau oder als Frontmäher und die Konditioniervorrichtung als nachgezogene Ausführung hinter dem Traktor, oder die Konditionierung erfolgt in einem zweiten Arbeitsgang mit einer zum Mähen unabhängigen Konditioniervorrichtung mit einem vorgeschalteten Aufnahmeorgan, was insgesamt zu einem höheren Arbeitsaufwand führt.

Zur Bildung einer Schwad des konditionierten Futters, aber auch zur Gewähr einer vorzüglichen Räumung hinter dem Mähwerk kann ein antreibbares Transportorgan 39 verwendet werden, das mit dem Ladungsträger 36 leitend verbunden ist.

In Fig. 8 ist eine solche Vorrichtung dargestellt, bei der als Transportorgan 39 ein quer zur Fahrtrichtung angeordnetes endloses Bandrechorgan 40 vorgesehen ist. An dem um zwei Rollen laufenden Band 42 sind abstehende Rechzinken 43 befestigt, die das vom Mähwerk abströmende Futter zur Seite fördern.

Während diesem seitlichen Transport zerschlagen funkenartig übertretende Ströme durch die zwischen den Rechzinken 43 am Band 42 vorgesehenen Elektroden 22 das Futter. Die Elektroden 22 sind mit dem Ladungsträger 36 leitungsverbunden, wobei zur Stromübertragung eine stromschienenähnliche Vorrichtung oder Schleifvorrichtungen (41) benutzt werden.

Die periodische Abgabe der Ströme an die Elektroden 22 wird durch eine Unterbrechersteuerung inszeniert. Vorteilhaft sind die Rechzinken 43 aus elektrisch nicht leitendem Material, wie z.B. Kunststoffe oder dgl.ausgebildet.

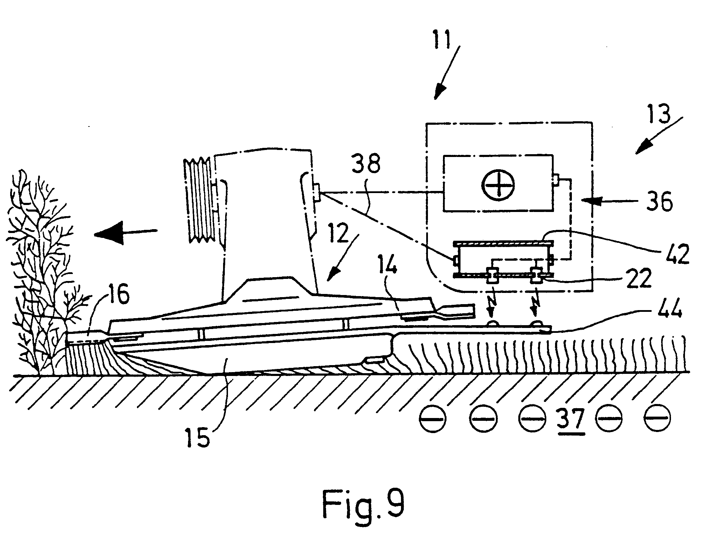

In Fig. 9 ist eine alternative Ausführungsform dargestellt, wobei das Mähwerk 12 an seiner rückwärtigen Seite mit einer Verlängerungsplatte 44 versehen ist. Die mit der Erde in Verbindung stehende Platte dient der Bildung der Potentialdifferenz mit dem Ladungsträger 36, der in diesem Falle aus einem mit Elektroden versehenen umlaufenden Band 42, jedoch ohne Rechzinken gebildet ist.

Die Verlängerungsplatte 44 könnte auch aus einem nicht metallischen bzw. elektrisch isolierenden Werkstoff hergestellt und mit leicht vorstehenden Elektroden 22 versehen sein. Letztere müssten über eine Leitung mit der Erde direkt oder über das Mähwerk mittelbar verbunden sein.

Durch eine schnelle Umlaufdrehzahl soll eine intensive Behandlung des Futters erzielt werden können, d.h. es entsteht auf die Breite des Futterstromes ein dichter Funkenregen.

Zur Optimierung des Zettens des Halmgutes hinter der Maschine kann ein mit der Erde mittelbar oder unmittelbar verbundener Rotor vem endet werden, der das Futter durch einen mit einer im Abstand angeordneten Leitwand gebildeten oberschlächtigen Förderkanal transportiert, wobei die Leitwand als Haube ausgebildet ist und mindestens auf einem Teil ihrer wirksamen Länge mit dem Ladungsträger 36 bzw. mit Elektroden 22 versehen ist.

Ihre Anordnung und Steuerung kann nach einem der erwähnten Ausführungsbeispiele erfolgen.

Im Zusammenhang mit der Verlängerungsplatte 44 könnte auch ein unterschlächtiger Förderkanal gebaut werden, wobei dann der Rotor als Ladungsträger 36 bestimmt ist, jedoch für beide Kanalvarianten eine weitgehend glatte Leitwand vorzusehen ist, um den mechanischen Konditionierungseffekt weitgehend verhindern zu können.

**Patentansprüche**

1. Verfahren zur Aufbereitung bzw. Konditionierung von landwirtschaftlichem Halmgut, mittels elektrischer Energie, dadurch gekennzeichnet, dass das Halmgut von einer zumindest annähernd quer zur Fliessrichtung aus einer hohen Potentialdifferenz bei geringem Strom betriebenen Funkenstrecke durchsetzt wird.

2. Vorrichtung zur Durchführung des Verfahrens nach Anspruch 1, gekennzeichnet durch paarweise, im Abstand sich zugewandt gegenüberliegend angeordnete, zur Bildung einer Funkenstrecke an mindestens eine elektrische Stromquelle angeschlossene Elektroden (22), zwischen denen das Halmgut hindurchführbar ist.

3. Vorrichtung nach Anspruch 2, dadurch gekennzeichnet, dass die Potentialdifferenz zwischen den Elektroden (22) annähernd quer zum Förderfluss des Halmgutes gerichtet ist.

4. Vorrichtung nach Anspruch 2, dadurch gekennzeichnet, dass die Elektroden (22) zur Bildung von zum Boden annähernd parallelen Funkenstrecken horizontal im Abstand einander gegenüberliegend angeordnet sind.

5. Vorrichtung nach Anspruch 3 und 4, dadurch gekennzeichnet, dass die Stromquelle (23) aus mindestens einem elektrischen Generator gebildet ist.

6. Vorrichtung nach Anspruch 3 und 4, dadurch gekennzeichnet, dass die Stromquelle (23) aus mindestens einem elektrischen Zünder gebildet ist.

7. Vorrichtung nach Anspruch 2, dadurch gekennzeichnet, dass die Elektroden (22) an Trägern (19, 20, 24, 25) isoliert gehalten sind.

8. Vorrichtung nach Anspruch 7, dadurch gekennzeichnet, dass die Träger (19, 20, 24, 25) den Förderkanal (21) für das Halmgut bilden.

9. Vorrichtung nach Anspruch 7 und 8, dadurch gekennzeichnet, dass zumindest einer der Elektrodenträger (19, 20, 24, 25) zur Querschnittsveränderung des Förderkanals (21) verstell- und feststellbar angeordnet ist.

10. Vorrichtung nach Anspruch 1 und 7, dadurch gekennzeichnet, dass die den Förderkanal (21) bildenden Elektrodenträger (19, 20, 24, 25) und die Enden der Elektroden (22) eine annähernd glatte Fläche bilden.

11. Vorrichtung nach Anspruch 10, dadurch gekennzeichnet, dass die Elektroden (22) über annähernd die ganze Fläche der Träger (19, 20, 24, 25) verteilt angeordnet sind.

12. Vorrichtung nach Anspruch 2, dadurch gekennzeichnet, dass sich die Strom- bzw. Funkenschläge zwischen den Elektroden (22) in gleicher Richtung fortbewegen.

13. Vorrichtung nach Anspruch 2, dadurch gekennzeichnet, dass sich die Strom- bzw. Funkenschläge an den Elektroden alternierend fortbewegen.

14. Vorrichtung nach Anspruch 2, dadurch gekennzeichnet, dass zumindest einer der Elektrodenträger (19, 20, 24, 25) als antreibbares Förderorgan ausgebildet ist.

15. Vorrichtung nach Anspruch 2, dadurch gekennzeichnet, dass die Elektroden (22) mindestens von einem Elektrodenträger (19, 20, 24, 25) als abstehende Zinken (35) vorgesehen sind.

16. Vorrichtung nach Anspruch 15, dadurch gekennzeichnet, dass die als Zinken (35) ausgebildeten Elektroden (22) bis in den Bereich ihrer freien Enden mit einer Isolation ummantelt sind.

17. Vorrichtung nach Anspruch 14 und 15, dadurch gekennzeichnet, dass die im Bereich des Förderkanals (21) sich befindenden Elektroden (22) mit der Stromquelle (23) leitungsverbunden sind.

18. Vorrichtung nach Anspruch 13 und 17, dadurch gekennzeichnet, dass die Strom- und Funkenschläge zwischen den stationären und antreibbaren Elektroden (22) synchron gesteuert sind.

19. Vorrichtung nach Anspruch 14, dadurch gekennzeichnet, dass die Elektroden (22) des antreibbaren Trägers (25) über einen Kollektor mit der Stromquelle verbunden sind.

20. Vorrichtung nach einem der vorhergehenden Ansprüche, dadurch gekennzeichnet, dass diese einem Mähwerk nachgeschaltet ist.

21. Vorrichtung nach Anspruch 20, dadurch gekennzeichnet, dass zwischen dem Mähwerk (12) und der Konditioniereinrichtung (13) eine Verteilvorrichtung (30) angeordnet ist.

22. Vorrichtung nach einem der Ansprüche 2 bis 21, dadurch gekennzeichnet, dass die Elektrodenträger einen den Futterstrom umgebenden kastenförmigen Förderkanal (21) bilden.

23. Vorrichtung nach Anspruch 2 oder 14 bis 19, dadurch gekennzeichnet, dass der antreibbare Elektrodenträger (25) als trommelförmiges Aufnahme- bzw. Förderorgan (31) vorgesehen ist, das mit dem als Haube (32) ausgebildeten und im Abstand über dem Aufnahme- bzw. Förderorgan (31) angeordneten Elektrodenträger (24) einen oberschlächtigen Förderkanal (21) bildet.

24. Vorrichtung nach Anspruch 23, dadurch gekennzeichnet, dass diese einem Mähwerk nachgeschaltet ist.

25. Vorrichtung nach Anspruch 2 oder 13 bis 19, dadurch gekennzeichnet, dass der antreibbare Elektrodenträger (25) als trommelförmiges Aufnahmebzw. Förderorgan (31) vorgesehen ist, das mit einem an ein Mähwerk anschliessendes Leitblech (32) einen unterschlächtigen Förderkanal (21) bildet.

26. Vorrichtung nach den Ansprüchen 14, 23, 24 oder 25, dadurch gekennzeichnet, dass die antreibbaren Elektrodenträger (25) mit Förderzinken (35) versehen sind, welche über die wirksamen Enden der Elektroden (22) hinausragen.

27. Vorrichtung nach einem der vorhergehenden Ansprüche, dadurch gekennzeichnet, dass diese einem Mähwerk (12) vorgelagert ist.

28. Vorrichtung zur Durchführung des Verfahrens nach Anspruch 1 mittels einer durch die Erde und einer erzeugbaren elektrischen Ladung gebildeten Potentialdifferenz, gekennzeichnet durch einen mit Elektroden (22) versehenen, im Abstand über der Erde (37) angeordneten Ladungsträger (36).

29. Vorrichtung nach Anspruch 28, dadurch gekennzeichnet, dass zur Auslösung des Strom- bzw. Funkenschlages eine mit den Elektroden (22) des Ladungsträgers und mit der Erde elektrisch verbundene Zündvorrichtung vorgesehen ist.

30. Vorrichtung nach Anspruch 28, dadurch gekennzeichnet, dass dem Ladungsträger (36) ein Mähwerk (12) oder Aufnahmeorgan vorgeschaltet ist.

31. Vorrichtung nach Anspruch 28, dadurch gekennzeichnet, dass die Potentialdifferenz zwischen einem auf der Erde abgestützten bzw. mit dieser leitend verbundenen Mähwerk (12), Aufnahme- oder Förderorgan und dem Ladungsträger (36) gebildet wird.

32. Vorrichtung nach einem der Ansprüche 28 bis 31, dadurch gekennzeichnet, dass der Ladungsträger (36) als Transportorgan (21) ausgebildet ist.

33. Vorrichtung nach Anspruch 32, dadurch gekennzeichnet, dass das Transportorgan (21) quer zur Fortbewegungsrichtung wirkend angeordnet ist.

34. Vorrichtung nach Anspruch 32 oder 33, dadurch gekennzeichnet, dass das Transportorgan (21) als antreibbares, endloses Band (25) ausgebildet ist, an dem mit der Ladung bzw. der Erde leitungsverbindbare Elektroden (22) vorgesehen sind, die zur Erde bzw. gegen ein mit dieser leitungsverbundenes Organ gerichtet sind.

35. Vorrichtung nach Anspruch 32, 33 oder 34, dadurch gekennzeichnet, dass das Transportorgan (21) als Bandrechorgan mit abstehenden Rechzinken (43) versehen ist.

36. Vorrichtung nach Anspruch 35, dadurch gekennzeichnet, dass die Rechzinken (43) aus einem elektrisch nicht leitenden Werkstoff gebildet sind.

37. Vorrichtung nach Anspruch 28 oder 31, dadurch gekennzeichnet, dass als Förderorgan ein mit der Erde leitungsverbundener, nachgeschlateter Rotor vorgesehen ist, der mit dem als weitgehend glatte Leitwand ausgebildeten Ladungsträger (36) zumindest Teilwerk eines oberschlächtigen Förderkanals bildet.

## Claims

1. A method of preparing or conditioning agricultural stalk crop by means of electrical energy, characterised in that the stalk crop is passed through a spark gap at least substantially transverse to the direction of flow and operated at low current from a high potential difference.

2. Apparatus for carrying out the method according to Claim 1, characterised by electrodes (22) disposed spaced apart in pairs opposite one another and connected to at least one electrical source of current in order to form a spark gap, through which the stalk crop can be conveyed.

3. Apparatus according to Claim 2, characterised in that the potential difference between the electrodes (22) is directed substantially transversely to the conveying stream of the stalk crop.

4. Apparatus according to Claim 2, characterised in that the electrodes (22) are disposed horizontally spaced apart opposite one another in order to form spark gaps substantially parallel to the ground.

5. Apparatus according to Claims 3 and 4, characterised in that the current source (23) is formed from at least one electrical generator.

6. Apparatus according to Claims 3 and 4, characterised in that the current source (23) is formed from at least one electrical igniter.

7. Apparatus according to Claim 2, characterised in that the electrodes (22) are held in an insulated manner on supports (19, 20, 24, 25).

8. Apparatus according to Claim 7, characterised in that the supports (19, 20, 24, 25) form the conveying channel (21) for the stalk crop.

9. Apparatus according to Claims 7 and 8, characterised in that at least one of the electrode supports (19, 20, 24, 25) is adapted for adjustment and location in order to vary the cross-section of the conveying channel (21).

10. Apparatus according to Claims 1 and 7, characterised in that the electrode supports (19, 20, 24, 25) forming the conveying channel (21) and the ends of the electrodes (22) form a substantially smooth surface.

11. Apparatus according to Claim 10, characterised in that the electrodes (22) are distributed over substantially the whole surface of the supports (19, 20, 24, 25).

12. Apparatus according to Claim 2, characterised in that the current pulses or sparks pass between the electrodes (22) in the same direction.

13. Apparatus according to Claim 2, characterised in that the current pulses or sparks pass alternately between the electrodes.

14. Apparatus according to Claim 2, characterised in that at least one of the electrode supports (19, 20, 24, 25) is constructed in the form of a drivable conveyor member.

15. Apparatus according to Claim 2, characterised in that the electrodes (22) of at least one electrode support (19, 20, 24, 25) are in the form of projecting tines (35).

16. Apparatus according to Claim 15, characterised in that the electrodes (22) in the form of tines (35) are sheathed with insulation up to the region of their free ends.

17. Apparatus according to Claims 14 and 15, characterised in that the electrodes (22) situated in the region of the conveying channel (21) are connected to the current source (23) by a supply lead.

18. Apparatus according to Claims 13 and 17, characterised in that the current pulses and sparks between stationary and drivable electrodes (22) are controlled in synchronism.

19. Apparatus according to Claim 14, characterised in that the electrodes (22) of the drivable support (25) are connected to the current source through a collector.

20. Apparatus according to any one of the preceding claims, characterised in that the apparatus is connected behind a mower.

21. Apparatus according to Claim 20, characterised in that a spreader (30) is arranged between the mower (12) and the conditioning apparatus (13).

22. Apparatus according to any one of Claims 2 to 21, characterised in that the electrode supports form a boxshaped conveying channel (21) surrounding the stream of fodder.

23. Apparatus according to Claim 2 or Claims 14 to 19, characterised in that the drivable electrode support (25) has the form of a drum-shaped pick-up and/or conveying member (31) which, with an electrode support (24) constructed in the form of a hood (32) and spaced above the pick-up and/or conveying member (31), forms an overshot conveying channel (21).

24. Apparatus according to Claim 23, characterised in that this is connected behind a mower.

25. Apparatus according to Claim 2 or Claims 13 to 19, characterised in that the drivable electrode support (25) is in the form of a drum-shaped pick-up and/or conveying member (31) which, with a guide plate (32) following on a mower, forms an undershot conveying channel (21).

26. Apparatus according to Claims 14, 23, 24 or 25 characterised in that the drivable electrode supports (25) are provided with conveying tines (35) which project beyond the effective ends of the electrodes (22).

27. Apparatus according to any one of the preceding claims, characterised in that this is mounted in front of a mower (12).

28. Apparatus for carrying out the method as claimed in Claim 1 by means of a potential difference formed by the earth and an electrical charge which can be generated, characterised by a charge carrier (36) provided with electrodes (22) spaced above the earth (37).

29. Apparatus according to Claim 28, characterised in that an ignition device, which is electrically connected to the electrodes (22) of the charge carrier and to the earth, is provided to trigger the current pulses or sparks.

30. Apparatus according to Claim 28, characterised in that a mower (12) or pick-up member is connected in front of the charge carrier (36).

31. Apparatus according to Claim 28, characterised in that the potential difference is produced between a mower (12), pick-up member or conveying member, supported on or electrically connected to earth, and the charge carrier (36).

32. Apparatus according to any one of Claims 28 to 31, characterised in that the charge carrier (36) is constructed in the form of a conveying member (21).

33. Apparatus according to Claim 32, characterised in that the conveying member (21) is disposed so as to act transversely to the direction of travel.

34. Apparatus according to Claim 32 or 33,characterised in that the conveying member (21) is an endless belt (25) which can be driven and on which there are provided electrodes (22) which can be electrically connected to the charge carrier and to earth respectively and which are directed towards the earth or an earthed member.

35. Apparatus according to Claims 32, 33 or 34, characterised in that the conveying member (21) is provided in the form of a belt-type rake member with projecting rake tines (43).

36. Apparatus according to Claim 35, characterised in that the rake tines (43) are formed from a material which is not electrically conducting.

37. Apparatus according to Claim 28 or 31, characterised in that a following rotor which is electrically connected to the earth is provided as a conveying member and, with the charge carrier (36) constructed in the form of a generally smooth guiding wall, forms at least a component of an overshot conveying channel.

**Revendications**

1. Procédé de traitement ou de conditionnement de tiges agricoles au moyen d'énergie électrique, caractérisé en ce que les tiges sont parcourues par un éclateur fonctionnant au moins à peu près transversalement à la direction d'écoulement, sur une grande différence de potentiel avec un courant faible.

2. Dispositif pour la mise en oeuvre du procédé selon la revendication 1, caractérisé par des électrodes (22) disposées deux a deux face à face avec espacement, reliées à au moins une source de courant électrique pour la formation d'un éclateur et entre lesquelles on peut faire passer les tiges.

3. Dispositif selon la revendication 2, caractérisé en ce que la différence de potentiel entre les électrodes (22) est dirigée à peu près transversalement au flux de transport des tiges.

4. Dispositif selon la revendication 2, caractérisé en ce que les électrodes (22) sont disposées horizontalement, face à face avec espacement, pour la formation d'éclateurs approximativement paralleles au sol.

5. Dispositif selon les revendications 3 et 4, caractérisé en ce que la source de courant (23) est formée d'au moins un générateur électrique.

6. Dispositif selon les revendications 3 et 4, caractérisé en ce que la source de courant (23) est formée d'au moins un allumeur électrique.

7. Dispositif selon la revendication 2, caractérisé en ce que les électrodes (22) sont retenues de façon isolée sur des supports (19,20, 24, 25).

8. Dispositif selon la revendication 7, caractérisé en ce que les supports (19, 20, 24, 25) forment le canal de transport (21) pour les tiges.

9. Dispositif selon les revendications 7 et 8 caractérisé en ce qu'au moins un des supports d'électrodes (19, 20, 24, 25) est disposé de manière à pouvoir être réglé et bloqué, pour la variation de section du canal de transport (21).

10. Dispositif selon les revendications 1 et 7, caractérisé en ce que les supports d'électrodes (19, 20, 24, 25) formant le canal de transport (21) et les extrémités des électrodes (22) forment une surface approximativement lisse.

11. Dispositif selon la revendication 10, caractérisé en ce que les électrodes (22) sont disposées de façon répartie à peu près sur toute la surface des supports (19, 20, 24, 25).

12. Dispositif selon la revendication 2, caractérisé en ce que les décharges disruptives se propagent entre les électrodes (22) dans la même direction.

13. Dispositif selon la revendication 2, caractérisé en ce que les décharges disruptives se propagent sur les électrodes de façon alternée.

14. Dispositif selon la revendication 2, caractérisé en ce qu'au moins un des supports d'électrode (19, 20, 24, 25) est conçu sous forme d'organe transporteur pouvant être entraine.

15. Dispositif selon la revendication 2, caractérisé en ce que les électrodes (22) sont prévues, sur au moins un support d'électrodes (19, 20, 24, 25), sous forme de dents en saillie (35).

16. Dispositif selon la revendication 15, caracterisé en ce que les électrodes (22) conçues sous forme de dents (35) sont enveloppées d'un isolant jusque dans la région de leurs extrémités libres.

17. Dispositif selon les revendications 14 et 15, caractérisé en ce que les électrodes (22) situées dans la région du canal de transport (21) sont en liaison conductrice avec la source de courant (23).

18. Dispositif selon les revendications 13 et 17 caractérisé en ce que les décharges disruptives entre les électrodes fixes et pouvant être entrainées (22) sont commandées de façon synchrone.

19. Dispositif selon la revendication 14, caractérisé en ce que les électrodes (22) du support pouvant être entrainé (25) sont reliées à la source de courant par l'intermédiaire d'un collecteur.

20. Dispositif selon l'une des revendications précédentes, caractérisé en ce qu'il est placé après une faucheuse.

21. Dispositif selon la révendication 20, caractérisé en ce qu'entre la faucheuse (12) et le dispositif de conditionnement (13) est disposé un dispositif de répartition (30).

22. Dispositif selon l'une des revendications 2 à 21, caractérisé en ce que les supports d'électrode forment un canal de transport en forme de boite (21) entourant le courant de fourrage.

23. Dispositif selon la revendication 2 ou les revendications 14 à 19, caractérisé en ce que le support d'électrode pouvant être entrainé (25) est prévu sous forme d'organe ramasseur ou transporteur en forme de tambour (31) qui forme, avec le support d'électrodes (24) conçu sous forme de capot (32), et disposé avec espacement au-dessus de l'organe ramasseur ou transportéur (31), un canal de transport passant par dessus (21).

24. Dispositif selon la revendication 23, caractérisé en ce qu'il est placé après une faucheuse.

25. Dispositif selon la revendication 2 ou les revendications 13 à 19, caractérisé en ce que le support d'électrodes pouvant être entrainé (25) est prévu sous forme d'organe ramasseur ou transporteur en forme de tambour (31) qui forme, avec une plaque directrice (32) faisant suite à une faucheuse, un canal de transport passant par dessous (21).

26. Dispositif suivant les revendications 14, 23, 24 et 25, caractérisé en ce que les supports d'électrodes pouvant être entrainés (25) sont munis de dents transporteuses (35) qui depassent les extrèmites utiles des électrodes (22).

27. Dispositif selon l'une des revendications précédentes, caractérisé en ce qu'il est placé avant une faucheuse (12).

28. Dispositif pour la mise en oeuvre du procédé selon la revendication 1 au moyen d'une différence de potentiel formé entre la terre et une charge électrique pouvant être engendrée, caractérisé par un porteur de charge (36) muni d'électrodes (22), disposé avec espacement au-dessus de la terre (37).

29. Dispositif selon la revendication 28, caractérisé en ce que pour le déclenchement de la décharge disruptive est prévu un dispositif d'allumage relié électriquement aux électrodes (22) du porteur de charge et à la terre.

30. Dispositif selon la revendication 28, caractérisé en ce qu'avant le porteur de charge (36) sont places une faucheuse (12) ou un organe ramasseur.

31. Dispositif selon la revendication 28, caractérisé en ce que la différence de potentiel est formée entre une faucheuse (12), un organe ramasseur ou transporteur, soutenus sur la terre ou reliés à celle-ci de façon conductrice, et le porteur de charge.

32. Dispositif selon les revendications 28 à 31, caractérisé en ce que le porteur de charge (36) est conçu sous forme d'organe transporteur (21).

33. Dispositif selon la revendication 32, caractérisé en ce que l'organe transporteur (21) est disposé de manière à agir transversalement à la direction de propulsion.

34. Dispositif selon les revendications 32 et 33, caractérisé en ce que l'organe transporteur (21) est conçu sous forme de courroie sans fin (25) pouvant être entrainée, sur laquelle sont prévues des électrodes (22) pouvant être reliées de façon conductrice à la charge ou à la terre et qui sont dirigées vers la terre ou vers un organe relié à celle-ci de façon conductrice.

35. Dispositif selon les revendications 32, 33 et 34 caractérisé en ce que l'organe transporteur (21) est conçu sous la forme d'un organe à bande et à râteau avec dents râteleuses qui s'écartent (43).

36. Dispositif selon la revendication 35, caractérisé en ce que les dents râteleuses (43) sont formées d'un matériau non conducteur de l'électricité.

37. Dispositif selon les revendications 28 et 31 caractérisé en ce que comme organe transporteur est prévu un rotor placé à la suite, relié à la terre de façon conductrice, qui forme, avec le porteur de charge (36) conçu sous forme de paroi directrice largement lisse, au moins une partie d'un canal de transport passant par dessus.

**0 086 317**

Fig. 1

Fig. 2

Fig. 3

Fig. 4

Fig. 5

Fig. 6

Fig. 7

Fig. 8

Fig.9